# EUROPEAN PATENT APPLICATION

(11) **EP 4 332 858 A1**
(43) Date of publication of application: **06.03.2024**
(21) Application number: 23186385.3
(22) Date of filing: 19.07.2023
(51) Int. Cl.: G06Q 10/0631, G06Q 50/06

(54) **NOTIFICATION METHOD, VEHICLE MANAGEMENT SYSTEM**

(30) Priority: 30.08.2022 JP 2022136759
(71) Applicant: TOYOTA JIDOSHA KABUSHIKI KAISHA, Toyota-shi, Aichi-ken, 471 8571 (JP)
(72) Inventor: OKI, Atsushi, Toyota-shi, 471-8571 (JP); TAKABATAKE, Hiroki, Toyota-shi, 471-8571 (JP); KINOMURA, Shigeki, Toyota-shi, 471-8571 (JP); FUJISAWA, Hisashi, Toyota-shi, 471-8571 (JP); FUJII, Hiromitsu, Kariya-shi, 448-8650 (JP)
(74) Representative: D Young & Co LLP

(57) **Abstract**

A notification method includes: determining (S16, and S17) candidate destinations for a vehicle from among a plurality of facilities requesting for electric power, using first information about the vehicle and second information about the plurality of facilities; and transmitting (S18) the candidate destinations to a user terminal (20) of the vehicle. The first information includes a power generation type of an electric power stored in a power storage device included in the vehicle. The second information includes a power generation type of the electric power requested by each of the plurality of facilities.

## Description

### CROSS REFERENCE TO RELATED APPLICATIONS

This nonprovisional application is based on Japanese Patent Application No. 2022-136759 filed on August 30, 2022, with the Japan Patent Office, the entire content of which is hereby incorporated by reference.

### BACKGROUND

### Field

The present disclosure relates to a notification method and a vehicle management system.

### Description of the Background Art

Facilities are known where electric vehicle supply equipment (EVSE) is installed at the premises. The EVSE is supplies electric power to a vehicle that includes a power storage device. For example, Japanese Patent Laying-Open No. 2015-231324 discloses a technique for scheduling electric power for supply to vehicles at each EVSE, using reservation information from patrons.

### SUMMARY

In recent years, development of V2H (Vehicle to Home) technology has been promoted. The V2H technology discharges electric power from a power storage device included in a vehicle to a home, which is also applicable to buildings (e.g., facilities), other than homes. Use of such a V2H technology makes a system become feasible in which a vehicle is allowed to carry electric power to a facility and supply the electric power to the facility.

Moreover, in recent years, the electric power is classified according to a way the electric power is generated. The electric power generated in a way having a less environmental impact tends to be evaluated as having a higher environmental value. Therefore, some facility may desire for electric power that is generated in a particular way. Specifically, facilities having desires for renewable energy, such as those participating in RE100 (Renewable Energy 100%) are expected.

If a user of a vehicle were notified of the information on the facility that desires for the electric power retained by the vehicle, the user would be able to drive the vehicle, carrying the electric power, to the facility, and pass the electric power to the facility by the V2H technology. However, there has not been such an effective technology proposed yet for notifying the vehicle's user of such a facility.

The present disclosure is made to solve the above problem. An object of the present disclosure is to notify a user of a vehicle, retaining an electric power generated in a particular way, of the facility having a desire for that electric power.

According to an embodiment of a first aspect of the present disclosure, a notification method described below is provided.

(Item 1) The notification method includes: determining candidate destinations for a vehicle from among a plurality of facilities requesting for electric power, using first information about the vehicle and second information about the plurality of facilities; and transmitting the candidate destinations to a user terminal of the vehicle. The first information includes a power generation type of an electric power stored in a power storage device included in the vehicle. The second information includes a power generation type of the electric power requested by each of the plurality of facilities.

With the above method, candidate destinations for the vehicle are transmitted to the user terminal. At this time, candidate destinations for the vehicle are determined, using the first information indicating the power generation type of the electric power stored in the power storage device included in the vehicle and the second information indicating the power generation type of the electric power requested by each of multiple facilities. Therefore, according to the above method, the user of the vehicle retaining the electric power that is generated in a particular way can be notified of a facility desiring for that electric power, as a candidate destination for the vehicle.

The notification method according to Item 1 can have a configuration according to any one of Items 2 through 4.

(Item 2) The notification method according to Item 1 further has the following characteristics. The first information further includes an amount of electric power dischargeable from the power storage device, and a location of the vehicle. The second information further includes an amount of electric power requested by each of the plurality of facilities, and locations of the plurality of facilities.

According to the above method, the vehicle and the facility are matched, considering the location of the vehicle and the amount of electric power stored in the vehicle, thereby facilitating providing the user of the vehicle with a notification of the facility that fits the location and conditions (e.g., the remaining amount of the battery) of the vehicle as a candidate destination of the vehicle.

(Item 3) The notification method according to Item 1 or 2 further has the following characteristics. Determining the candidate destinations includes: excluding from the candidate destinations a facility more than a predetermined distance away from a location of the vehicle; and excluding from the candidate destinations a facility requesting for an electric power of a power generation type that is not stored in the power storage device.

According to the above method, the user of the vehicle is notified of the facility that fits the location of the vehicle and the electric power stored in the vehicle, as a candidate destination for the vehicle. Therefore, the vehicle storing the electric power requested by the facility is allowed to more easily supply the electric power to the facility.

(Item 4) The notification method according to any of one Items 1 to 3 further has the following characteristics. The notification method further includes setting a lower upper limit for an incentive as a facility requesting for electric power has less patrons, the incentive being provided from the facility to the vehicle when the vehicle supplies the facility with the electric power requested by the facility.

The facility selected as the destination of the vehicle is not only supplied with the electric power from the vehicle but also more likely to be used by the vehicle's user visiting the facility. With the above method, the lesser the number of patrons of the facility, the lower the upper limit of the incentive provided by the facility per vehicle (the upper limit of incentive per vehicle). Paying lower value incentives to more vehicles enables attracting more vehicles to the facility, without increasing the total incentive to be paid.

According to a certain embodiment, A program for causing a computer to perform the notification method according to any one of Items 1 to 4 is provided. In other embodiments, a computer device for distributing the program is provided.

According to an embodiment of the second aspect of the present disclosure, a vehicle management system described below is provided.

(Item 5) The vehicle management system includes: a computer device including a processor and a storage device storing a program for causing the processor to execute the notification method according to any one of Items 1 to 4; the vehicle; and the user terminal. The vehicle is configured to record a power generation type of an electric power when the electric power is charged to the power storage device. The user terminal is configured to perform: displaying candidate destinations, including a plurality of facilities, upon receiving the candidate destinations from the computer device; requesting a user to select one facility from among the plurality of facilities; and transmitting identification information of the facility selected by the user to the computer device.

According to the vehicle management system described above, by the computer device performing the notification method according to any one of Items 1 to 4, the user of the vehicle retaining the electric power that is generated in a particular way can be notified of a facility desiring for that electric power, as a candidate destination for the vehicle.

Note that the vehicle may be an electric-powered vehicle (xEV) that uses the electric power as all or some of a mechanical power source. Examples of the xEV include a battery electric vehicle (BEV), a plug-in hybrid electric vehicle (PHEV), and a fuel cell electric vehicle (FCEV).

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram for illustrating an overview of a vehicle management system according to an embodiment of the present disclosure.
Fig. 2 is a diagram for illustrating a process of supply of electric power from a vehicle to a facility, according to the embodiment of the present disclosure.
Fig. 3 is a diagram for illustrating information received by an aggregator server from a respective vehicle and a respective facility in the vehicle management system according to the embodiment of the present disclosure.
Fig. 4 is a flowchart illustrating a procedure of a notification method according to the embodiment of the present disclosure.
Fig. 5 is a flowchart illustrating one example of a process performed by a user terminal upon receiving a notice of candidate destinations for a target vehicle, the notice being transmitted by the notification method of Fig. 4.

### DESCRIPTION OF THE PREFERRED EMBODIMENTS

An embodiment according to the present disclosure will be described in detail, with reference to the accompanying drawings. In the figures, the same reference sign is used to refer to the same or like parts, and the description thereof will not be repeated.

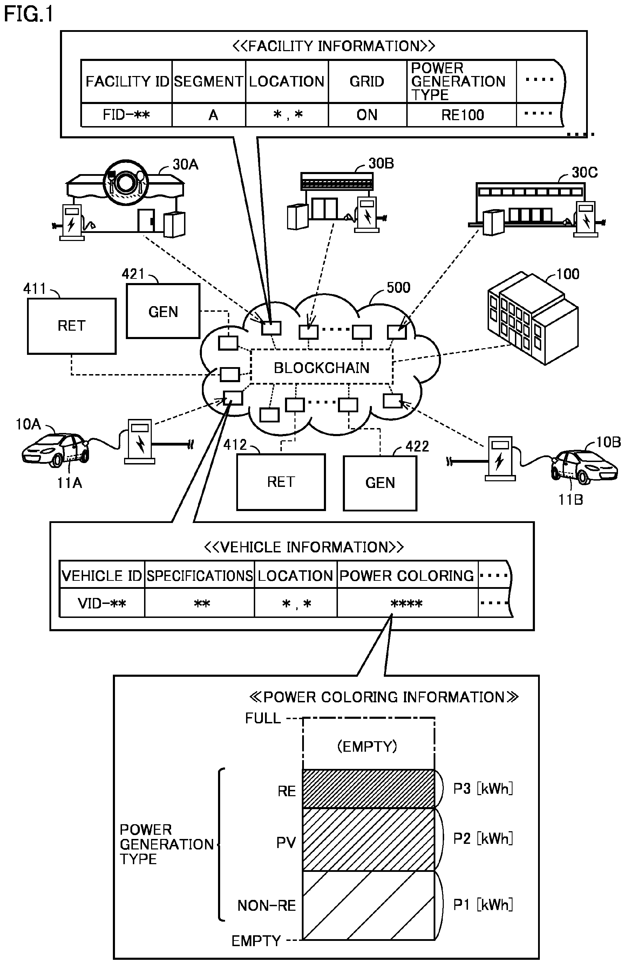

Fig. 1 is a diagram for illustrating an overview of a vehicle management system according to an embodiment according to the present disclosure. Referring to Fig. 1, the vehicle management system according to the embodiment includes a server 100, multiple vehicles (e.g., vehicles 10A and 10B), multiple facilities (e.g., facilities 30A through 30C), multiple electricity retailers (e.g., electricity retailers 411 and 412), and multiple power generation equipment (e.g., power generation equipment 421 and 422). Nodes corresponding individually to a vehicle, a facility, an electricity retailer, and power generation equipment, and a blockchain connecting the nodes are implemented on a cloud 500. The server 100 is also connected to the blockchain, functioning as one node of the blockchain. The server 100 may function as a super node. A platform for managing the vehicles and the facilities is built on the cloud 500 by blockchain technology.

The nodes in the blockchain share a ledger (a blockchain ledger), based on a distributed ledger technology. Multiple nodes sharing the data can achieve high availability (characteristics that the system is less likely to be down). With the blockchain, the ledger is updated based on a predetermined consensus algorithm (e.g., PoW, PoS, DPoS, PoI, PoC, or Ordering Service), thereby preventing tampering of the data. A mechanism such as electronic signature can also assure the reliability of the data. P2P (Peer to Peer) electric power transaction may be conducted on the blockchain, using smart contract.

The blockchain ledger records who generates how much electric power where and how, and where he/she supplied or stored (accumulated) the generated electric power to. For example, a retail ID or generator ID, described below, indicates who generated electric power. For example, the ledger also records, in the form of power coloring information as shown in Fig. 1, how and how much the electric power is generated. For example, the flow (a chain of custody) and the location (the storage location) of the generated electric power are indicated by electric power tracking information described below. If the electric power is passed between nodes, the electric power tracking information on both nodes are updated. The distributed ledger technology allows the flow of the electric power to be tracked in real time.

For example, the electricity retailer 411 procures the electric power generated by renewable energy (solar energy, wind energy, hydro energy, geothermal energy, etc.), and sells the electric power via a power grid (grid). The electricity retailer 412 sells the electric power generated by their power supply equipment (hereinafter, also referred to as a "power supply G") via a power grid (grid). The power generation type for the power supply G includes thermal power. Besides thermal power, the power generation type of the power supply G may further include at least one of nuclear power, pumped hydropower, and renewable energy (RE).

A node corresponding to each electricity retailer (hereinafter, referred to as a "retail node") manages the electric power that is handled by a corresponding electricity retailer. Each retail node records, to the blockchain ledger, information about the electric power procured by a corresponding electricity retailer (hereinafter, referred to as "retail information"). The retail information includes identification information (the retail ID) of the electricity retailer, the electric power storage location (e.g., the identification information of the power storage device), the power generation type, the power generation (Wh), and the electric power tracking information.

The power generation type can be set arbitrarily. According to the present embodiment, however, the power generation type is classified as RE, photovoltaics (PV), wind turbine (WT), or non-RE, etc. The power generation type of the electric power sold by the electricity retailer 411 is classified as "RE." Since the power generation type of the power supply G includes those other than RE, the power generation type of the electric power sold by the electricity retailer 412 is classified as "non-RE. "

The electric power tracking information included in the retail information indicates a flow of the electric power procured by an electricity retailer. If the electricity retailer retains the electric power, the retail node records to the blockchain ledger the electric power tracking information indicating that the electric power is at the electric power storage location. If the electric power procured by the electricity retailer is sold, the retail node records to the blockchain ledger the chain of custody of the electric power, in conjunction with a node corresponding to the destination (the buyer) of the electric power. The retail node may update the blockchain ledger, in conjunction with the facilities and terminals that are retained by the electricity retailer.

While Fig. 1 illustrates two electricity retailers 411 and 412 only, it should be noted that any number of electricity retailers may participate in the platform (the blockchain), which may be, for example, three or more and less than twenty electricity retailers, or twenty or more electricity retailers. In addition, the power generation type of the electric power sold by the electricity retailer is not limited to the above, and the electric power may be generated in other ways.

For example, the power generation equipment 421 is solar power generation equipment. The power generation equipment 421 may be a large PV system (a mega solar power system). Alternatively, the power generation equipment 421 may be a photovoltaic panel installed on the roof of a home. The power generation equipment 422 is, for example, wind power generation equipment. The power generation equipment 422 may be an onshore or offshore WT plant.

A node corresponding to each power generation equipment (hereinafter, referred to as a "power-generating node") manages the electric power generated by the power generation equipment. Each power-generating node records to the blockchain ledger the information about the electric power generated by a corresponding power generation equipment (hereinafter, also referred to as "power generation information"). The power generation information includes the identification information of the power generation equipment (the generator ID), the power generation type (e.g., PV or WT), the power generation (Wh), and the electric power tracking information. The electric power tracking information included in the power generation information indicates the flow of the electric power generated by the power generation equipment. Each power-generating node records to the blockchain ledger the chain of custody of an electric power generated by a corresponding power generation equipment, in conjunction with a node corresponding the destination of the electric power.

While Fig. 1 illustrates two power generation equipment 421 and 422 only, it should be noted that any number of power generation equipment may participate in the platform (the blockchain), which may be, for example, three or more and twenty or less power generation equipment, or twenty or more power generation equipment. Moreover, the power generation type of the electric power generated by the power generation equipment is not limited to PV and WT, and may be other method of generation of electric power (e.g., thermal power, hydropower, geothermal, or biomass).

Each vehicle included in the vehicle management system is an electric-powered vehicle (xEV) that includes a power storage device and participates in the platform (the blockchain). For example, the vehicles 10A and 10B are battery electric vehicles (BEV) respectively including batteries 11A and 11B. Each vehicle is capable of performing the external charging (charging of the power storage device with an electric power external to the vehicle) and the external power-feeding (supply of an electric power discharged from the power storage device to outside the vehicle). The vehicle may perform the external charging or external power-feeding, while being connected to electric vehicle supply equipment (EVSE) (plugged-in state). The vehicle may use the EVSE (a home charger) installed in the user's home to perform the external charging. The vehicle may use a public EVSE to perform the external charging. The vehicle may also supply electric power (the external power-feeding) to buildings such as the home or the facility by a vehicle to home (V2H) technology. Each vehicle communicates with a corresponding node, and updates the blockchain ledger every time the vehicle performs the external charging or external power-feeding.

A node corresponding to a vehicle (hereinafter, referred to as a "vehicle node") manages the electric power retained by the vehicle. Each vehicle node records the information about the corresponding vehicle (hereinafter, also referred to as "vehicle information") to the blockchain ledger. The vehicle information includes: a vehicle ID (identification information of vehicle); the specifications of the vehicle about charge-discharge capability (e.g., a full charge capacity, a rated charge power, and a rated discharge power); location information indicating the location where the external charging or external discharging was last performed; the power coloring information; and the electric power tracking information. The power coloring information indicates the amount of electric power, by power generation type, stored in the power storage device included in the vehicle. For example, as shown in Fig. 1, the power coloring information indicates that the battery 11A retains: an electric power labeled as P1 (kWh), which is generated with a power supply configuration, other than renewable energy (RE); electric power labeled as P2 (kWh), which is generated with PV; and electric power labeled as P3 (kWh), which is generated with renewable energy (RE).

The electric power tracking information included in the vehicle information indicates the flow of the electric power stored in the power storage device of the vehicle. As the vehicle performs the external charging or external power-feeding, the location information, the power coloring information, and the electric power tracking information are updated. As the vehicle performs the external charging, the vehicle node records the chain of custody of the electric power to the blockchain ledger, in conjunction with a node corresponding to the source of supply of the electric power. As the vehicle performs the external power-feeding, the vehicle node records the chain of custody of the electric power to the blockchain ledger, in conjunction with a node corresponding to the destination of the electric power.

The vehicle node records the power generation type of the electric power that is evidently solar-generated power, among RE, as "PV" (individual RE), and records the power generation type of the electric power that is evidently generated with RE but is not clear as to which RE the electric power is generated, as "RE" (overall RE). For example, if the user purchases an electric power from the electricity retailer 411 and charges the power storage device of the vehicle with the electric power, the vehicle node records the power generation type of that electric power as "RE." If the power storage device of the vehicle is charged with an electric power generated by the power generation equipment 421, the vehicle node records the power generation type of that electric power as "PV." If the user purchases an electric power from the electricity retailer 412 and charges the power storage device of the vehicle with the electric power, the vehicle node records the power generation type of that electric power as "non-RE."

As the vehicle enters the plugged-in state, the information indicating conditions of the vehicle (such as the SOC) is uploaded to the vehicle node, and the vehicle node, in turn, updates the power coloring information. If the current SOC value of the power storage device (at the present update) is lower than the SOC value (the previous SOC value) from the previous update, the vehicle node regards an electric power corresponding to the difference between the current SOC value and the previous SOC value as being consumed while the vehicle was traveling. At this time, the vehicle node estimates that the electric powers stored in the power storage device at the time of the previous update have been consumed in order starting from an electric power having the lowest environmental value to an electric power having the highest environmental value. The electric power that is generated in a way that causes a less environmental impact has a higher environmental value. In other words, RE has a higher environmental value than non-RE. For the electric powers whose environmental values are the same, the vehicle node may estimate that they have been evenly consumed. The state of charge (the SOC) indicates a remaining amount of the battery, representing, for example, the ratio of the current amount of electric power storage to the fully charged electric power storage from 0 to 100%.

While Fig. 1 illustrates two vehicles 10A and 10B only, any number of vehicles may participate in the platform, which may be, for example, three or more and less than a hundred vehicles. The vehicle is not limited to a BEV that includes no internal combustion engine. The vehicle may be a PHEV that includes an internal combustion engine, or other type (e.g., a FCEV).

Each facility included in the vehicle management system includes a power storage device and EVSE in the premises, and participates in the platform (the blockchain). Each facility monitors the supply-demand balance of the electric power. If there is a shortage of electric power, the facility requests the server 100 for electric power. If there is an excess of electric power, the facility stores the surplus power into the power storage device. The EVSE of the facility functions as a V2H charger-discharger (a power conditioner between the vehicle and the facility). Specifically, the EVSE has a function of converting the electric power, discharged from the vehicle, into the electric power that is usable by the facility, and a function of converting the electric power supplied from the facility into the electric power that is usable by the vehicle. Each facility may supply the vehicle with the electric power through the EVSE. Each facility may also receive supply of the electric power from the vehicle through the EVSE.

A node corresponding to each facility (hereinafter, referred to as a "facility node") manages the electric power handled by the facility. Each facility node records information about a corresponding facility (hereinafter, also referred to as "facility information") to the blockchain ledger. The facility information includes a facility ID (identification information of the facility), a segment according to a type of business, the location (e.g., the latitude and the longitude), information indicating the relationship between the facility and a power grid (on-grid/off-grid), the power generation type of the electric power handled by the facility, an amount of electric power stored in the facility, and electric power tracking information. The facility information may further include information (e.g., the facility name), other than the above.

Each facility is classified into one of segments, according to a type of business of the facility. For example, the facility 30A is a restaurant, and belongs to a segment A. The facility 30B is a convenience store and belongs to a segment B. The facility 30C is a fitness gym and belongs to a segment C. Note that the number of segments is not limited to three, and any number of segments is possible. Examples of the type of business, other than the above, include a cafe terrace, a hotel, a department store, a super market, and a shopping mall. While Fig. 1 illustrates three facilities 30A through 30C only, any number of facilities may participate in the platform, which may be, for example, four or more and a hundred or less facilities, or a hundred or more facilities.

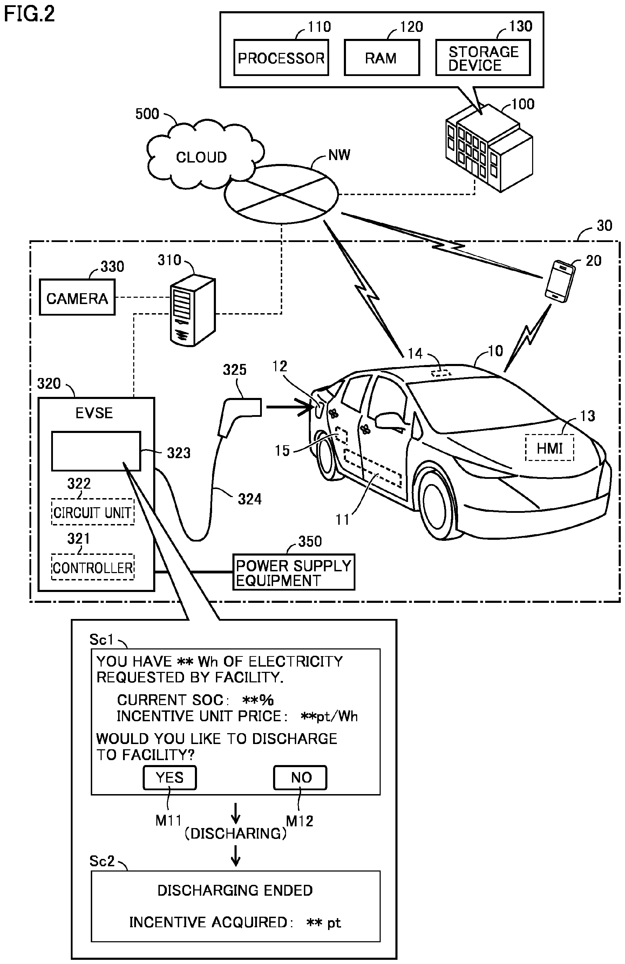

An off-grid facility is independent of a power grid, and is not supplied with the electric power from the power grid. An on-grid facility, in contrast, is connected to a power grid, and supplied with the electric power from the power grid. The facility handles two power generation types for electric power, which is "RE100 (Renewable Energy 100%)" and otherwise (non-RE). The facility of RE100 handles only the electric power that is generated with renewable energy. The on-grid facility of RE100 may purchase electric power from the electricity retailer 411, but do not purchase electric power from the electricity retailer 412. The off-grid facility of RE100, basically, secures a necessary amount of electric power with variable renewable energy source (e.g., power generation equipment like a photovoltaic panel) in the premises, but requests the server 100 for the electric power generated with renewable energy, if there is a shortage of electric power due to over demand. In contrast, a facility that is supplied with electric power generated with energy, other than renewable energy, is classified into "non-RE." The server 100 is a computer belonging to an aggregator. In the following, the server 100 may be referred to as an "aggregator server." A configuration of the server 100 will be described below (see Fig. 2).

The stored amount of electric power indicates an amount of electric power (Wh) stored in the power storage device in the premises of the facility. All the electric powers stored in the power storage device of the facility of RE 100 are handled as electric powers having the power generation type "RE." All the electric powers stored in the power storage device of the facility of the non-RE are handled as electric powers having the power generation type "non-RE." The electric power tracking information included in the facility information indicates flows of the electric powers handled by the facility. If the facility supplies an electric power to a vehicle through the EVSE, the facility node records the chain of custody of the electric power to the blockchain ledger, in conjunction with a node corresponding to the destination of the electric power (a vehicle node). For example, if the power storage device of a vehicle is charged with an electric power supplied by the facility of RE 100, the vehicle node records the power generation type of that electric power as "RE." If the power storage device of a vehicle is charged with an electric power supplied by the facility of non-RE, the vehicle node records the power generation type of that electric power as "non-RE." The facility node may update the blockchain ledger at predetermined cycles, in conjunction with the server provided within the facility.

Fig. 2 is a diagram for illustrating the external power-feeding from the vehicle to the facility. The vehicles and the facilities included in the vehicle management system have the configuration shown in Fig. 2 (a common configuration), for example. In the following, these vehicles will be referred to as a "vehicle 10," unless otherwise distinguished, and these facilities will be referred to as a "facility 30," unless otherwise distinguished. In the example shown in Fig. 2, the vehicle 10 is parked in the premises of the facility 30. The user of the vehicle 10 possesses a mobile terminal 20. The mobile terminal 20 functions as a user terminal for the vehicle 10.

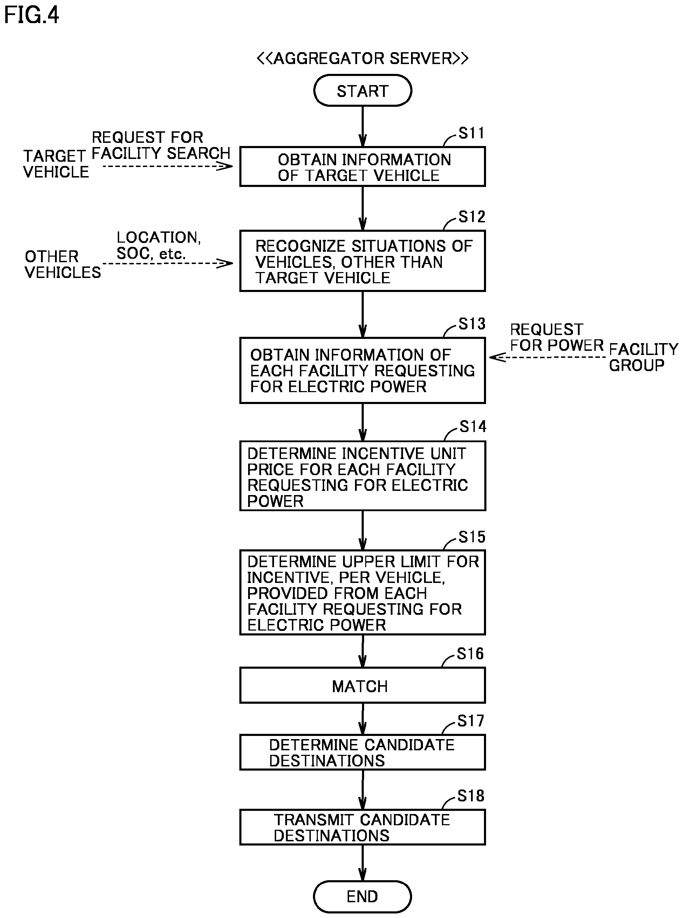

The server 100 includes a processor 110, a random access memory (RAM) 120, and a storage device 130. As the processor 110, for example, a central processing unit (CPU) can be adopted. The storage device 130 is capable of saving the stored information. Various process steps (e.g., the series of process steps as shown in Fig. 4 described below) are performed by the processor 110 executing programs stored in the storage device 130. However, these various process steps are not limited to be executed by software, and is executable by dedicated hardware (an electronic circuit).

The facility 30 includes a server 310, an EVSE 320, a camera 330, and power supply equipment 350. The server 310 is a computer that can use the platform on the cloud 500 via a communication network NW. The server 100 and the server 310 communicate with each other via the communication network NW. The communication network NW is, for example, a wide area network built of the Internet and radio base stations. The EVSE 320 is installed outside the facility 30 (e.g., a parking lot in the premises of the facility 30). The camera 330 includes a camera for monitoring the indoor space of the facility 30, and a camera for monitoring the outdoor space of the facility 30. The camera 330 outputs an obtained video to the server 310. The server 310 sequentially obtains the number of patrons of the facility 30, based on the video obtained by the camera 330.

The power supply equipment 350 includes a distribution panel for supplying electric power to various devices installed in the premises of the facility 30, for example. If the facility 30 is an on-grid facility, the power supply equipment 350 is electrically connected to the power grid. If the facility 30 is an off-grid facility, the power supply equipment 350 is not connected to the power grid. The power supply equipment 350 may be electrically connected to the power generation equipment (e.g., PV equipment) installed in the premises of the facility 30. The power supply equipment 350 may further include a power storage device for storing the generated electric power.

The vehicle 10 includes a battery 11, an inlet 12, a human machine interface (HMI) 13, a communication device 14, and an electronic control unit (hereinafter, represented as an "ECU") 15.

As the battery 11, a known vehicle power storage device (e.g., a flooded secondary battery, an all-solid-state secondary battery, or an assembled battery) can be adopted. Examples of the vehicle secondary battery include a lithium-ion battery and a nickel-hydrogen battery.

The ECU 15 is a computer which includes, for example, a processor and a storage device. The HMI 13 includes an input device and a display device. The HMI 13 may include a touch panel display. In the present embodiment, the HMI 13 includes a navigation system. The HMI 13 may further include at least one of a meter panel and a head up display. The HMI 13 may further include a smart speaker that accepts a speech input.

The ECU 15 communicates with a device external to the vehicle, through the communication device 14. The communication device 14 includes a telematics control unit (TCU) and/or a data communication module (DCM), which performs wireless communications. The ECU 15 communicates with the server 100 while the vehicle 10 is traveling. The ECU 15 can use the platform on the cloud 500 via the communication network NW. The communication device 14 includes a communications I/F for direct communications with the mobile terminal 20 present in the vehicle or in an area surrounding the vehicle. The vehicle 10 (the ECU 15) and the mobile terminal 20 may perform a short-range communication such as a wireless LAN (Local Area Network), NFC (Near Field Communication), or Bluetooth (registered trademark).

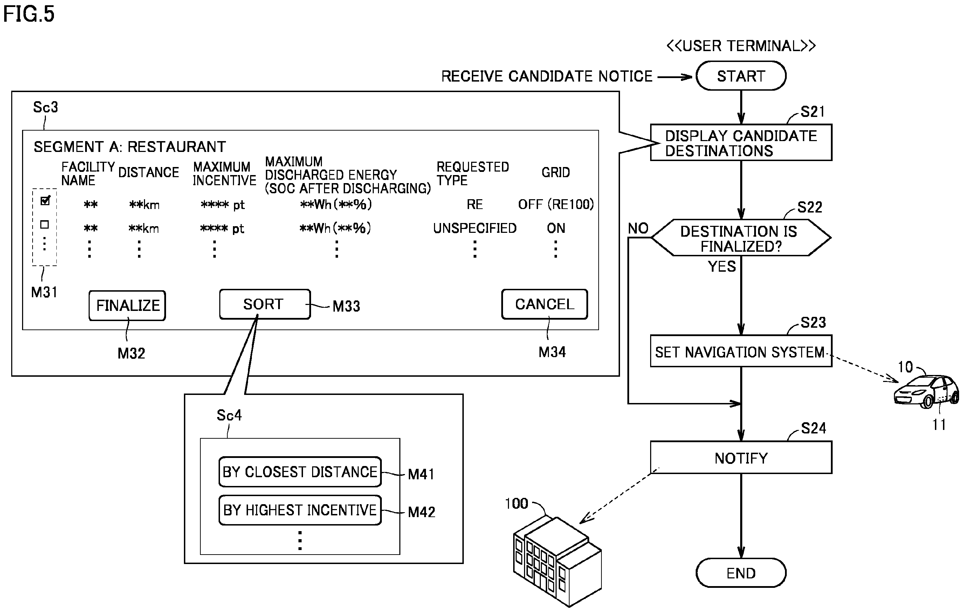

In the present embodiment, smartphone, equipped with a touch panel display, is employed as the mobile terminal 20. The smartphone has a computer incorporated therein, which includes a processor and a storage device. Various process steps (e.g., the series of process steps as shown in Fig. 5 described below) are performed by the processor executing programs stored in the storage device. The mobile terminal 20 also accesses the communication network NW by wireless communications, and communicates with the server 100 via the communication network NW. However, the present disclosure is not limited thereto. Any mobile terminal can be employed as the mobile terminal 20. For example, a laptop, a tablet, a portable gaming console, a wearable device (such as a smartwatch, smart glasses, smart gloves), an electronic key, etc. can also be employed as the mobile terminal 20.

The main body of the EVSE 320 has a controller 321 and a circuit unit 322 incorporated therein. The EVSE 320 further includes a touch panel display (hereinafter, represented as "TPD") 323 and a charging cable 324. The controller 321 includes a processor and a storage device, and controls the circuit unit 322 in accordance with commands from the server 310. The circuit unit 322 includes a circuit for supplying electric power to the vehicle 10 (charging the battery 11), and a circuit for supply electric power to the power supply equipment 350 of the facility 30. The charging cable 324 has a connector 325 (a plug) at the tip.

The connector 325 is detachable from the inlet 12 of the vehicle 10. The inlet 12 corresponds to a charger-discharger port functioning as a charging port and a discharge port. The vehicle 10 is brought into an electrically connected state (the plugged-in state) with the EVSE 320 by the connector 325 of the charging cable 324, connecting to the main body of the EVSE 320, being connected to the inlet 12 of the vehicle 10. In contrast, for example, while the vehicle 10 is traveling, the vehicle 10 is in a state not electrically connected to the EVSE 320 (a plugged-out state).

The EVSE 320 includes a connection detection circuit (not shown) for detecting the state (the plugged-in state/the plugged-out state) of the connector 325. The connection detection circuit outputs the state of the connector 325 to the controller 321. The controller 321 obtains the information indicating the operational status of the EVSE 320 (e.g., the electric power charged from the power supply equipment 350 to the vehicle 10, and the electric power discharged from the vehicle 10 to the power supply equipment 350) from a sensor (not shown) included in the circuit unit 322. In the present embodiment, only the vehicle 10 participating in the platform (the blockchain) is permitted to use the EVSE 320. The server 310 identifies the vehicle 10 using the EVSE 320, based on the vehicle ID received from the vehicle 10, and permits the vehicle 10 to use the EVSE 320. During the period of use of the EVSE 320, the information about the EVSE 320 and the information about the vehicle 10 using the EVSE 320 (e.g., the SOC and the power coloring information) are sequentially transmitted from the EVSE 320 to the server 310.

If there is a shortage of electric power in the facility 30 and the vehicle 10 and the EVSE 320 are brought into the plugged-in state, the server 310 learns, based on the blockchain ledger (e.g., the power coloring information of the vehicle 10), how much electric power, requested by the facility 30, the vehicle 10 has. For example, if the power generation type of the electric power handled by the facility 30 is "RE100," the facility 30 requests the electric power that is generated with RE (renewable energy). In the following, an amount of electric power retained by the vehicle 10 and requested by the facility 30 will be referred to as a "target remaining amount of electric power." For example, in the power coloring information illustrated in Fig. 1, the amount of electric power requested by the facility 30 of RE100 (the electric power generated with RE) is "P2 + P3 "(kWh), which corresponds to the target remaining amount of electric power.

The server 310 obtains the target remaining amount of electric power of the vehicle 10, as described above. Subsequently, the TPD 323 shows a screen Sc1, for example. The screen Sc1 displays a message requesting the vehicle 10 to discharge electric power, the target remaining amount of electric power of the vehicle 10, the current SOC of the battery 11, and information about an incentive (e.g., an incentive unit price). The screen Sc1 further displays an operating unit M11 that accepts an approval input, and an operating unit M12 that accepts a reject input.

As the operating unit M11 is manipulated by the user of the vehicle 10, the server 310 performs the discharge control on the battery 11, while communicating with the controller 321 of the EVSE 320. If discharging of electric power from the battery 11 has eliminated the power shortfall of the facility 30 or depleted the target remaining amount of electric power of the vehicle 10, the server 310 ends the discharging of electric power from the battery 11. The server 310 also ends the discharging of electric power from the battery 11 if the server 310 receives a discharge stop request from the vehicle 10 or the EVSE 320. Then, as the discharging of electric power from battery 11 ends, the TPD 323 shows a screen Sc2, for example. The screen Sc2 displays a message notifying that the discharging has ended, and information indicating an incentive that the user of the vehicle 10 has acquired from this discharging. The server 310 may further transmits the discharge end notice to the mobile terminal 20. Note that the process by the EVSE 320 ends, without the battery 11 being discharged, if the operating unit M12 is operated on the screen Sc1.

In the present embodiment, an incentive point system is employed. In other words, the amount of acquired incentives is counted by the number of points (pt). A higher number of points indicates a higher value. The points may be treated as virtual currency or redeemable. The points may also be exchanged with an item or a title (e.g., a title to receive the service for the number of points). In the present embodiment, a number of points per unit discharge amount (pt/Wh) is adopted as the incentive unit price. However, the present disclosure is not limited thereto. The incentive unit price may be a unit price for the number of times of discharging, or a unit price for an amount of discharge time. The mechanism for the incentive is not limited to the above incentive point system, and may be determined arbitrarily by contract.

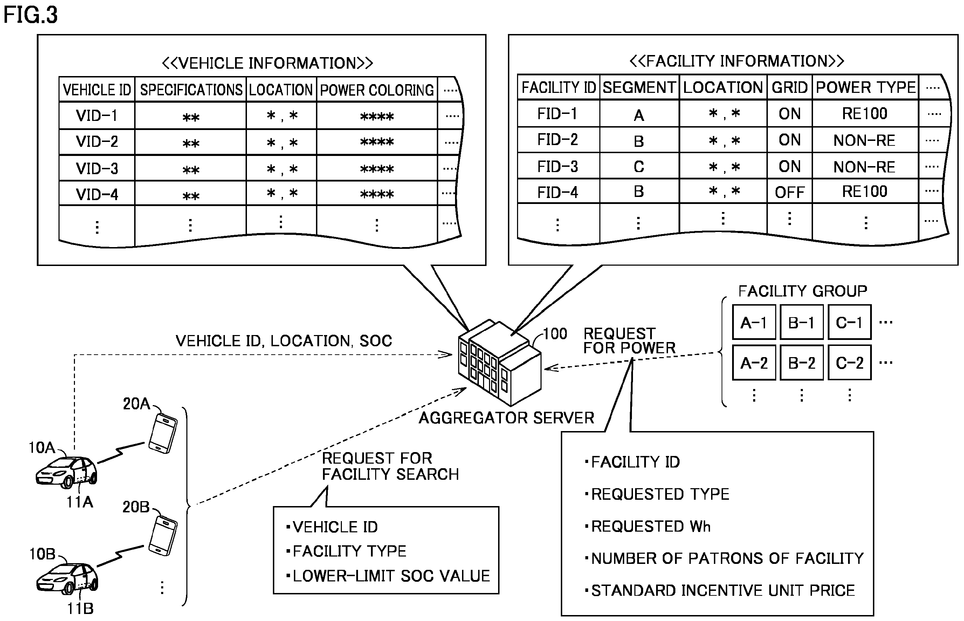

Fig. 3 is a diagram for illustrating the information received by the server 100 (the aggregator server) from respective vehicles and facilities. The facility group shown in Fig. 3 is included in the vehicle management system of Fig. 1. In Fig. 3, the facilities belonging to the segment A are represented as "A-1," "A-2," ..., the facilities belonging to the segment B are represented as "B-1," "B-2," ..., and the facilities belonging to the segment C are represented as "C-1," "C-2," ..., and so on.

Referring to Fig. 3, the respective vehicles (the vehicles 10A and 10B, ...) included in the vehicle management system of Fig. 1 sequentially transmit their real-time locations and the SOCs to the server 100 along with the vehicle IDs. These information are stored into the storage device 130 (Fig. 2). The storage device 130 manages the current location and the current SOC of a respective vehicle by vehicle ID.

A predetermined application software (hereinafter, referred to as a "mobile app") is install on user terminals (the mobile terminals 20A, 20B, ...) of the respective vehicles. Each user terminal can exchange information with the server 100 through the mobile app. The user of the vehicle 10 can manipulate the mobile terminal 20 (the user terminal of the vehicle 10) of Fig. 2, and thereby specify a type of facility (e.g., any of the segments A through C) that the user wishes to use. The user can further manipulate the mobile terminal 20 and thereby request the server 100 to: extract, from the facility group shown in Fig. 3, one or more facilities that belong to the specified type (segment) suitable under the current conditions (e.g., the location and the state) of the vehicle 10; and notify the mobile terminal 20 of the extracted facilities. In response to the user operation, the mobile terminal 20 transmits to the server 100 a signal requesting for the above extraction and notification (hereinafter, referred to as a "facility search request").

The facility search request includes the vehicle ID, the type (the segment) of the facility, and a lower-limit SOC value. The server 100 uses the vehicle ID included in the facility search request to obtain, from the blockchain ledger, the information on the vehicle 10 that has transmitted the facility search request. The type of the facility is specified by the user, as noted above. However, the ECU 15 or the mobile terminal 20 may specify the type of the facility, instead of the user. The ECU 15 or the mobile terminal 20 may estimate the facility that the user wishes to use, from the history data about the movement of the vehicle 10. The lower-limit SOC value is the lower limit for the SOC, indicating the limit of electric power discharged from the vehicle. The lower-limit SOC value is pre-set for each vehicle. The vehicle 10 of Fig. 2 is not permitted to discharge electric power from the battery 11 if the SOC of the battery 11 is below the lower-limit SOC value. The ECU 15 forces the vehicle 10 to end discharging of the electric power from the battery 11 if the SOC of the battery 11 reaches the lower-limit SOC value. The lower-limit SOC value may be a fixed value. Any value may be set as the lower-limit SOC value by the user of the vehicle. Alternatively, the ECU 15 or the mobile terminal 20 may set the lower-limit SOC value, based on the history data of the vehicle 10.

The server 310 (Fig. 2) of each facility included in the facility group shown in Fig. 3 monitors the power supply-demand balance of the facility, and, if there is a shortage of electric power in the facility, transmits to the server 100 the signal requesting for electric power (hereinafter, referred to as an "electric power request"). The electric power request includes the facility ID, a requested power generation type of electric power (hereinafter, represented as a "requested type"), a requested amount of electric power (hereinafter, represented as a "requested Wh"), the number of current patrons, and a standard incentive unit price. In the present embodiment, the requested type for the facility of RE100 is "RE," and the requested type for the facility of non-RE is "unspecified (RE and non-RE)." The standard incentive unit price is a parameter that is used for the process shown in Fig. 4 described below, and pre-set for each facility. The standard incentive unit price may be a fixed value. Any value may be set as the standard incentive unit price by the administrator of the facility. Alternatively, the standard incentive unit price may be set by the server 310, based on the price of the electric power.

Fig. 4 is a flowchart illustrating a procedure for a notification method according to the present embodiment. The process illustrated in the flowchart is executed by the server 100, in response to receiving a facility search request. The server 100 performs the series of process steps shown in Fig. 4 described below on the vehicle from which the server 100 receives the facility search request (hereinafter, referred to as a "target vehicle"). Hereinafter, a respective step in the flowchart will be simply represented as "S."

Referring to Fig. 4, at S11, the server 100 obtains information about the target vehicle, based on the vehicle ID. Specifically, the server 100 checks the content of the facility search request received from the target vehicle, and obtains the vehicle information of the target vehicle from the blockchain ledger. The server 100 also obtains the current location and the current SOC of the target vehicle from the storage device 130. The server 100 further determines, for each power generation type, the amount of electric power (hereinafter, represented as "ΔP_{A}") that is dischargeable from the power storage device (the battery 11) of the target vehicle. The server 100 may determine ΔP_{A} for each power generation type, based on the power coloring information of the target vehicle, the current SOC, and the lower-limit SOC value.

In the subsequent S12, based on the vehicle ID, the server 100 recognizes the situations of vehicles other than the target vehicle (hereinafter, referred to as "other vehicles"). Specifically, the server 100 obtains the vehicle information of other vehicle from the blockchain ledger. The server 100 obtains the current locations and the current SOCs of other vehicles from the storage device 130. The server 100 also requests, for each power generation type, for the amounts of electric power (hereinafter, represented as "ΔP_{B}") dischargeable from the power storage devices (the battery 11) of other vehicles, based on the power coloring information and the current SOCs of other vehicles. The server 100 further determines whether other vehicles have made destination notices (S24 of Fig. 5) described below.

In the subsequent S13, the server 100 obtains the information about each facility requesting for electric power (i.e., each facility from which the server 100 received the electric power request as mentioned above), based on the facility ID. Specifically, the server 100 checks the content of the electric power request received from each facility, and obtains from the blockchain ledger the facility information of each facility requesting for electric power.

In the subsequent S14, the server 100 determines the incentive unit price for each facility requesting for electric power. The server 100 determines the incentive unit price for the facility, based on the standard incentive unit price received from the facility (Fig. 3).

Specifically, the server 100 predicts whether the Wh (Fig. 3) requested by the facility is satisfied, based on the information obtained in S11 through S13. The server 100 may make the prediction, using ΔP_{A} and ΔP_{B} (S11, S12) for each power generation type of each vehicle (the target vehicle and other vehicles) within the vicinity of the facility (e.g., within an area set relative to the location of the facility). The server 100 may also revise the ΔP_{B} and the requested Wh for each power generation type, using the destination notice (S24 of Fig. 5) described below. The server 100 may assume that the electric power has been exchanged between the vehicle and the facility (electric power is supplied from the vehicle to the facility) indicated by the destination notice. If the server 100 predicts that the standard incentive unit price fulfills the requested Wh by the facility, the server 100 uses the standard incentive unit price, as is, as the incentive unit price for the facility. If the server 100 predicts that the standard incentive unit price does not fulfill the requested Wh by the facility, the server 100 performs an add operation on the standard incentive unit price to raise the incentive unit price for the facility higher than the standard incentive unit price. As the above, the incentive unit price according to a result of prediction is determined for each facility.

In the subsequent S15, the server 100 determines an upper limit for the incentive per vehicle provided from each facility requesting for electric power (an upper-limit incentive per vehicle). The server 100 determines the upper-limit incentive per vehicle provided from the facility, based on the number of patrons of the facility (Fig. 3). Specifically, the less the number of patrons of the facility, the lower the server 100 determines the upper-limit incentive per vehicle provided from the facility. As such, the upper-limit incentive per vehicle is determined for each facility according to the number of patrons of the facility. Lowering the upper-limit incentive per vehicle enables the facility to pay incentives to more vehicles. Moreover, paying lower value incentives to a larger number of vehicles enables the facility to attract a larger number of vehicles, without raising the total amount of incentives. The user of the target vehicle arrived at the facility is likely to become a patron of the facility. Note that the upper-limit incentive per vehicle provided from the facility corresponds to the upper limit of the incentive provided from the facility to the target vehicle when the target vehicle supplies the facility with the electric power of the requested type (the requested electric power). The incentive provided from the facility to the target vehicle may include coupons available at the facility.

In the subsequent S16, the server 100 matches the target vehicle and a facility. The server 100 extracts facilities belonging to the facility type (Fig. 3) specified by the user, from among facilities participating in the platform. In the following, the extracted facilities will be referred to as "first candidates." Subsequently, the server 100 excludes from the first candidates the facilities more than a predetermined distance away from the current location of the target vehicle. In the following, these surviving facilities will be referred to as "second candidates." Subsequently, the server 100 excludes from the second candidates the facilities requesting for electric powers of power generation types that are not stored in the power storage device (the battery 11) of the target vehicle. In the following, these surviving facilities will be referred to as "third candidates." If the third candidates include more than a predetermined number of facilities, the server 100 performs an exclusion process described below.

Based on ΔP_{A} (S11) for each power generation type of the target vehicle, the requested type (S13) by each facility included in the third candidates, the requested Wh (S13), the incentive unit price (S14), and the upper-limit incentive (S15) per vehicle 1, the server 100 determines a maximum incentive acquirable by the target vehicle from each facility included in the third candidates.

For example, from the facility having the requested type of "RE," the requested Wh of "20kWh," the incentive unit price of "1pt/Wh," and the upper-limit incentive per vehicle of "10000pt," 5000 points is the maximum incentive acquirable by the target vehicle whose total ΔP_{A} of overall RE and individual RE (PV, WT, etc.) is 5kWh. In another aspect, if the requested Wh of the facility is "3kWh," 3000 points is the maximum incentive for the target vehicle. If the upper-limit incentive per vehicle from the facility is "2000 points," 2000 points is the maximum incentive for the target vehicle.

The server 100 excludes the facilities from the third candidates, starting from a facility that provides the lowest maximum incentive to the target vehicle to a facility that provides the highest maximum incentive to the target vehicle, and narrows down the facilities to a predetermined number. In the following, a predetermined number of surviving facilities will be referred to as a "fourth candidates."

In the subsequent S17, the server 100 determines candidate destinations for the target vehicle. If the number of the facilities included in the third candidates is greater than the predetermined number in S16, the server 100 determines fourth candidates as candidate destinations for the target vehicle. If the number of the facilities included in the third candidates is not greater than the predetermined number in S16, the server 100 determines the third candidates as candidate destinations for the target vehicle. However, if the number of the facilities included in the third candidates is "zero" in S16, the server 100 determines the second candidates as candidate destinations for the target vehicle. If the number of the facilities included in the second candidates is "zero" in S16, the server 100 determines the first candidates as candidate destinations for the target vehicle.

In the subsequent S18, the server 100 transmits the candidate destinations determined in S17 to the user terminal (the mobile terminal 20) of the target vehicle. Specifically, the server 100 transmits to the user terminal of the target vehicle a signal (hereinafter, referred to as a "candidate notice") which includes the candidate destinations for the target vehicle and the information of each facility included in the candidates (e.g., the information displayed at S21 of Fig. 5 described later).

Fig. 5 is a flowchart illustrating one example process performed by the user terminal having received the candidate notice (a notice of the candidate destinations for the target vehicle). The process illustrated in the flowchart is performed by the user terminal (the mobile terminal 20) of the target vehicle, in response to receiving the candidate notice.

Referring to Fig. 5, at S21, the user terminal shows the candidate destinations for the target vehicle. Then, the user terminal receives an input from the user of the target vehicle, while showing the candidate destinations for the target vehicle. In the subsequent S22, the user terminal determines whether the destination is finalized by the user.

Specifically, at S21, the mobile terminal 20 shows a screen Sc3, for example. The screen Sc3 displays, for each facility indicated by the candidate notice as a candidate destination for the target vehicle, the segment (common to all the facilities), the facility name, the distance between the target vehicle and the facility, the maximum incentive, an amount of electric power to be discharged to acquire the maximum incentive, the SOC value of the target vehicle after discharging electric power to acquire the maximum incentive, the requested type (RE/unspecified), the relationship (on-grid/off-grid) between the facility and the power grid, and the power generation type (RE100/non-RE) of the electric power handled by the facility. The screen Sc3 further displays an operating unit M31 (e.g., a checkbox) that accepts an input for selecting one facility from among the candidate destinations, an operating unit M32 that accepts a finalization input, an operating unit M33 that accepts a sort (list) input, and an operating unit M34 that accepts a cancel input. If the candidate destinations for the target vehicle include multiple facilities, the screen Sc3 displays the operating units M31 and M32, and the mobile terminal 20 thereby requests the user to select one facility from among the facilities.

As the operating unit M33 is manipulated by the user on the screen Sc3, the mobile terminal 20 shows a screen Sc4. The screen Sc4 includes operating units M41, M42, ... that accept a sorting rules input. As the operating unit M41 is manipulated by the user, the mobile terminal 20 sorts the candidate destinations (multiple facilities) for the target vehicle in the order starting from a facility closest to the target vehicle to a facility farthest away from the target vehicle, and shows the screen Sc3 displaying the sorted candidate destinations. On the other hand, as the operating unit M42 is manipulated by the user, the mobile terminal 20 sorts the candidate destinations (multiple facilities) for the target vehicle in the order starting from a facility whose maximum incentive is the highest to a facility whose maximum incentive is the lowest, and shows the screen Sc3 displaying the sorted candidate destinations. In this manner, the user can sort the candidate destinations for the target vehicle displayed on the screen Sc3, according to desired rules.

As the operating unit M32 is manipulated by the user on the screen Sc3 while one facility (the destination) is being selected by the operating unit M31, S22 is determined to be YES, and the process proceeds to S23. In S23, the user terminal sets the facility (the destination) selected by the user on the navigation system (the HMI 13) of the target vehicle. The navigation system refers to the map information, and searches for an optimal route (e.g., the shortest route) from the current location of the target vehicle to the place where the target vehicle is headed to (the destination), and shows the found route on a map. Subsequently, in S24, the user terminal transmits to the server 100 a signal (hereinafter, referred to as a "destination notice") that includes the identification information (the facility ID) of the facility (the destination of the target vehicle) selected by the user, and the vehicle ID of the target vehicle.

In contrast, as the operating unit M34 is manipulated by the user on the screen Sc3, S22 is determined to be NO, and the process proceeds to S24, without S23 being performed. In this case, in S24, a signal indicating that a destination is not finalized by the user is transmitted from the user terminal to the server 100, instead of the destination notice. As the process step of S24 is performed, the series of process steps end, as shown in Fig. 5.

As described above, the notification method according to the present embodiment include the series of process steps of Fig. 4. Specifically, the notification method includes: determining (S16 and S17) candidate destinations for the target vehicle from among multiple facilities, using the first information about the target vehicle and the second information about multiple facilities requesting for electric power; and transmitting (S18) the determined candidate destinations to the user terminal of the target vehicle. The first information includes the power coloring information (Fig. 1) indicating the power generation type of the electric power stored in the power storage device included in the target vehicle. The second information includes the power generation type (RE/unspecified) of the electric power requested by each of the facilities. Such a method enables the user of the target vehicle retaining the electric power generated by a particular method (e.g., renewable energy) to be notified of the facilities in need of that electric power as the candidate destinations for the target vehicle. In addition, supply of the electric power not only to the on-grid facility but also to the off-grid facility is enabled by causing the target vehicle to carry the electric power to the facility. Moreover, there is no need of the wheeling of electric power using a power grid, achieving a reduced wheeling cost.

The vehicle management system according to the present embodiment includes the server 100, the vehicle 10, and the mobile terminal 20 (the user terminal) (see Fig. 2). The server 100 is a computer device which includes the processor 110, and the storage device 130 storing a program for causing the processor 110 to execute the notification method. The vehicle 10 communicates with a corresponding node and updates the blockchain ledger each time the vehicle 10 performs the external charging or external power-feeding. In other words, when the battery 11 (the power storage device) is charged, the vehicle 10 records the power generation type of the electric power charged to the battery 11. The mobile terminal 20 is configured to: display (S21 of Fig. 5), upon receiving candidate destinations from the server 100, the candidate destinations, including multiple facilities; requests (S21 of Fig. 5) the user to select one facility from among the facilities displayed; and transmits (S24 of Fig. 5) to the server 100 the identification information of the facility selected by the user. According to such a vehicle management system, by the server 100 (the computer device) performing the notification method, the user of the vehicle retaining the electric power that is generated in a particular way can be notified of a facility desiring for that electric power, as a candidate destination for the vehicle.

Note that the display content on the screen Sc3 illustrated in Fig. 5 can be changed as appropriate. Some items displayed on the screen Sc3 (e.g., the facility name) may be omitted.

In the above embodiment, nodes, other than the server 100, are implemented on the cloud. However, the present disclosure is not limited thereto. The form of the platform (the blockchain) may be changed as appropriate. For example, all the nodes (the retail node, the power-generating node, the vehicle node, the facility node, etc.) in the blockchain may be implemented by on-premises servers. In the above embodiment, the mobile terminal 20 is employed as the user terminal of the vehicle. However, the present disclosure is not limited thereto. Any terminal belonging to the user of the vehicle may be employed as the user terminal. For example, the user terminal may be a vehicle-mounted terminal (e.g., the HMI 13).

The power grid may be a large-scale alternating-current grid, a microgrid, or a direct-current (DC) grid. The vehicle is not limited to a four-wheel drive passenger car. The vehicle may be a bus or truck, or a three-wheel BEV. The vehicle may include a solar panel. The vehicle may be capable of wireless charging. The vehicle that performs the wireless charging may be regarded as being in a state equivalent to "the plugged-in state" mentioned above upon completion of the alignment of a power transmitting part (e.g., transmitter coil) on the power supply equipment side and a power receiving part (e.g., the receiving coil) on the vehicle side. The vehicle may be capable of autonomous driving, or include autonomous flying capabilities. The vehicle may be capable of unmanned driving (e.g., a robotaxi, an automatic guided vehicle (AGV), or an agricultural equipment).

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A notification method, comprising:
determining (S16, S17) candidate destinations for a vehicle (10, 10A, 10B) from among a plurality of facilities (30, 30A, 30B, 30C) requesting for electric power, using first information about the vehicle and second information about the plurality of facilities; and
transmitting (S18) the candidate destinations to a user terminal (20) of the vehicle, wherein
the first information includes a power generation type of an electric power stored in a power storage device included in the vehicle, and
the second information includes a power generation type of the electric power requested by each of the plurality of facilities.

2. The notification method according to claim 1, wherein
the first information further includes an amount of electric power dischargeable from the power storage device, and a location of the vehicle, and
the second information further includes an amount of electric power requested by each of the plurality of facilities, and locations of the plurality of facilities.

3. The notification method according to claim 1, wherein
determining the candidate destinations includes:
excluding (S16) from the candidate destinations a facility more than a predetermined distance away from a location of the vehicle; and
excluding (S16) from the candidate destinations a facility requesting for an electric power of a power generation type that is not stored in the power storage device.

4. The notification method according to claim 1, further comprising:
setting (S15) a lower upper limit for an incentive as a facility requesting for electric power has less patrons, the incentive being provided from the facility to the vehicle when the vehicle supplies the facility with the electric power requested by the facility.

5. A vehicle management system, comprising:
a computer device (100) including
a processor (110) and
a storage device (130) storing a program for causing the processor to execute the notification method according to any one of claims 1 to 4;
the vehicle; and
the user terminal, wherein
the vehicle is configured to record a power generation type of an electric power when the electric power is charged to the power storage device, wherein
the user terminal is configured to perform:
displaying (S21) candidate destinations, including a plurality of facilities, upon receiving the candidate destinations from the computer device;
requesting (S21) a user to select one facility from among the plurality of facilities; and
transmitting (S24) identification information of the facility selected by the user to the computer device.
